# EUROPÄISCHE PATENTSCHRIFT

(11) **EP 0 856 244 B1**
(45) Veröffentlichungstag und Bekanntmachung des Hinweises auf die Patenterteilung: **30.06.2004**
(21) Anmeldenummer: 98100501.0
(22) Anmeldetag: 14.01.1998
(51) Int. Cl.: A01D 34/00

(54) **Mulchmäher**
Mulching mower
Tondeuse de paillage

(30) Priorität: 24.01.1997 US 789226
(43) Veröffentlichungstag der Anmeldung: 05.08.1998
(73) Patentinhaber: DEERE & COMPANY, Moline, Illinois 61265-8098 (US)
(72) Erfinder: Hohnl, Gary David, Slinger, Wisconsin 53086 (US); Benter, Dean William, Horicon, Wisconsin 53032 (US)
(74) Vertreter: Magin, Ludwig Bernhard

(56) Entgegenhaltungen:
- EP-A- 0 367 027
- EP-A- 0 532 068
- EP-A- 0 642 730
- EP-A- 0 763 319
- US-A- 2 815 634
- US-A- 5 212 938
- US-A- 5 214 906
- US-A- 5 390 480

## Beschreibung

Die Erfindung bezieht auf einen Mäher nach dem Oberbegriff des Anspruchs 1.

Ein bekannte Mäher (US-A-5 212 938) ist als Mulchmäher ausgestaltet. Bei einem Mulchen wird das Schnittgut nach dem Mähen nicht aufgesammelt, da Mulchmäher in der Regel nicht mit einem Auswurf für das Schnittgut versehen sind. Das Schnittgut soll vielmehr fein gehäckselt der Grasnarbe zugeführt werden. Bei dem bekannten Mäher sind zwei Messerkammern in derselben Querebene mit gegenseitigen Abstand derart angeordnet, daß eine dritte Messerkammer nach vorne versetzt zwischen den beiden anderen Messerkammern noch vorgesehen ist. Die in den einzelnen Messerkammern vorhandenen Messer laufen alle in derselben Drehrichtung um. Wenn ein derartiger Mäher zwischen den vorderen und rückwärtigen Rädern eines Rasentraktors angebracht werden soll, laufen die vorderen Räder bei dem Mähen über noch nicht geschnittenes Gras und drücken es nieder. Der von den rotierenden Messern erzeugte Aufwind ist nicht in der Lage, das Gras wieder für einen zufriedenstellenden Schnitt aufzurichten. Außerdem kommt es wegen der versetzten Anordnung der Messerkammern zu nicht unerheblichen Platzproblemen.

Aus der US-A-2,815,634 geht ein gattungsgemäßer Mäher mit zwei Messerkammer hervor, welche in ihren außenliegenden Seitenbereichen jeweils eine Auswurföffnung aufweisen. In jeder der Messerkammern ist ein Messer vorgesehen, welches um eine vertikale Achse rotiert, wobei die beiden Messer gleichsinnig drehen. Die Schneidkreise der Messer weisen einen Überlappungsbereich auf, in dem die Messerkammern ausgeschnitten ausgeführt sind. Von einem oberen Bereich des Mähers erstreckt sich eine Wand bis knapp über die Messer nach unten, um die Messerkammern voneinander zu trennen und die Bildung eines Unterdrucks in den Messerkammern zu ermöglichen, welcher eine Förderung von geschnittenem Gras zu den Auswurföffnungen unterstützen soll.

Die nach veröffertlichbe EP-A1-0 763 319 zeigt einen Rasenmäher mit zwei angrenzend aneinander angeordneten Schneidkammern. In den Schneidkammern ist jeweils ein Messer angeordnet, wobei diese Messer gegenläufig umlaufen und das bezogen auf die Vorwärtsfahrtrichtung des Rasenmähers rechts angeordnete Messer im Uhrzeigersinn und das links angeordnete Messer gegen den Uhrzeigersinn dreht, wobei sich die Schneidkreise der Messer in dem Bereich in dem die Schneidkammern aneinander angrenzen überlappen. Die Schneidkammern sind in diesem Überlappungsbereich vollständig gegeneinander geöffnet, so dass geschnittenes Gras sowie Luft ungehindert von einer Schneidkammer in die andere gelangen können, wodurch es zu Klumpenbildung von Schnittgut und zu Anhäufungen kommen kann. Ein ähnlicher Mäher ist in der US-A-5 214 906 beschierben.

Die mit der Erfindung zu lösende Aufgabe wird darin gesehen, zumindest einige bei den bekannten Mähern vorhandene Nachteile auszuschalten, weshalb nach der Erfindung vorgesehen ist, daß das erste Messer rechts von dem zweiten Messer angeordnet ist und im Einsatz im Uhrzeigersinn umläuft, daß das zweite Messer links von dem ersten Messer angeordnet ist und im Einsatz entgegen dem Uhrzeigersinn umläuft und daß die Messerkreise sich überlappen. Auf diese Weise ist eine kompakte Bauweise ermöglicht, die gewährleistet, daß beim Mähen zwischen den einzelnen Messerkammern keine ungeschnittenen Streifen verbleiben. Die kompakte Bauweise eignet sich besonders für einen Zwischenachsanbau und stellt sicher, daß beim Vorwärtsfahren niedergedrücktes Gras durch die gegenläufig umlaufenden Messer wieder aufgerichtet wird, damit es nachfolgend einwandfrei geschnitten werden kann. Im Bereich der sich überlappenden Messerkreise ist ein Flußteiler vorgesehen, der sich von der Oberseite des Mähwerksgehäuses aus nach unten bis dicht oberhalb des ersten und zweiten Messers erstreckt, wobei der Flußteiler mit einem Abschnitt versehen ist, der das Gemisch aus Luft und Schnittgut teilt und in die entsprechende Messerkammer leitet.

Nach einem weiteren Vorschlag der Erfindung ist vorgesehen, daß die beiden umfangsmäßig geschlossenen Messerkammern in dem Bereich der sich überlappenden Messerkreise durch eine Öffnung miteinander verbunden sind, wobei die Öffnung durch eine Kante begrenzt ist, die sich in dem Bereich der sich überlappenden Messerkreise dicht oberhalb des ersten und zweiten Messers befindet. Auf diese weise ist ein geringerer Kraftbedarf als bei vollkommen geschlossenen Kammern erforderlich. Die vorgesehene Kante trägt dazu bei, daß die zirkulierenden Schnittgutpartikel in ihren Messerkammern verbleiben.

Zweckmäßig können ferner die Messer als Mulchmesser mit einem äußeren Schneidteil, der einen nachlaufenden nach oben gebogenen Flügelteil aufweist, und mit einem inneren Mulchteil ausgebildet sein, der einen nachlaufenden nach unten gebogenen Abweisteil aufweist. Auf diese Weise drückt der Flügelteil das Schnittgut nach oben und der Abweisteil nachfolgend nach unten.

Damit das Schnittgut in der Messerkammer nochmals geschnitten und nachfolgend in die Grasnarbe abgelegt wird, kann jede Messerkammer mit einer umlaufenden Ringkammer oder Auskehlung versehen sein, die oberhalb des zugehörigen Messerkreises liegt, in einem Frontabschnitt des Mähwerksgehäuses relativ hoch ist und sich zum Rückabschnitt des Mähwerksgehäuses hin abflacht, wobei die Ringkammer oder Auskehlung im Frontbereich relativ schmal und im Rückabschnitt relativ breit ist.

Ein guter Schnitt und eine gute Ablage lassen sich dann erreichen, wenn das Mähwerksgehäuse in seinem Frontabschnitt mit einer unteren Kante versehen ist, die höher liegt als eine untere Kante in dem Rückabschnitt des Mähwerksgehäuses.

Die Luft- und Schnittgutzirkulation lässt sich verbessern, wenn die Ringkammer oder Auskehlung in dem Bereich der sich überlappenden Messerkreise einen geringeren Abstand zur zugehörigen Messerachse als in den übrigen Bereichen aufweist, so daß jede Messerkammer D- oder etwa D-förmig ausgebildet ist.

An Hindernissen insbesondere an Hausmauern oder Gartenzäunen lässt sich leicht arbeiten, wenn das Mähwerksgehäuse an einem Rasentraktor hinter dessen beiden Vorderräder derart aufgehängt ist, daß das rechte Vorderrad mit seiner Außenkante zu der rechten Außenkante der zugehörigen Messerkammer und daß das linke Vorderrad mit seiner Außenkante zu der linken Außenkante der zugehörigen Messerkammer ausgerichtet ist.

In der Zeichnung ist ein nachfolgend näher erläutertes Ausführungsbeispiel der Erfindung dargestellt.
Es zeigt:

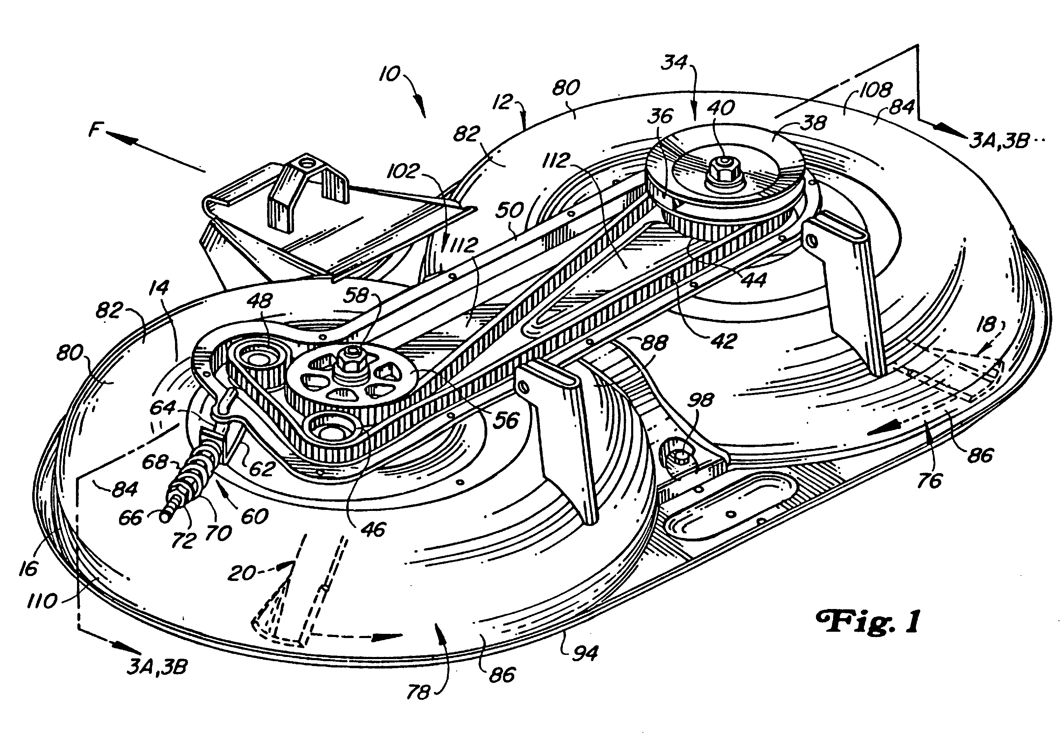

- Fig. 1: ein Mähwerksgehäuse für ein Zwei-Messer-Mähwerk in perspektivischer Darstellung von oben,
- Fig. 2: ein Schema für die Zusammensetzung der Fig. 3A und 3B,
- Fig. 3A: die rechte rückwärtige Seite des Mähwerksgehäuses, teilweise im Schnitt,
- Fig. 3B: die linke rückwärtige Seite des Mähwerksgehäuses, teilweise im Schnitt,

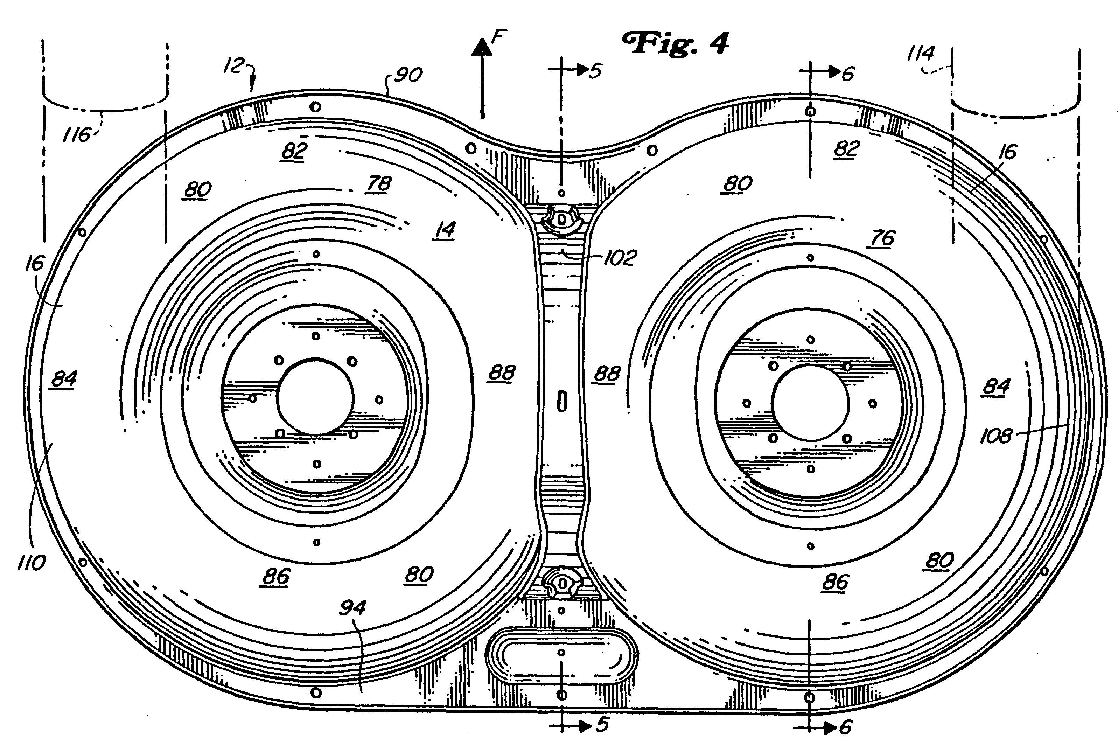

- Fig. 4: das Mähwerksgehäuse in der Draufsicht,
- Fig. 5: einen Schnitt nach der Linie 5:5 in Fig. 4,

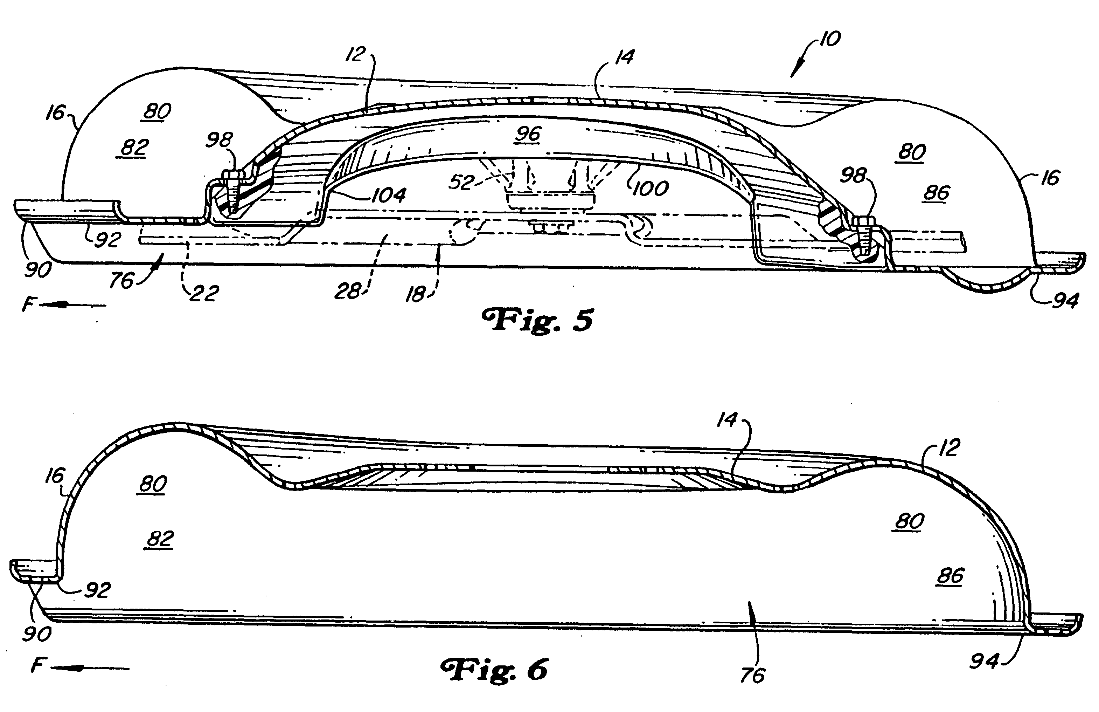

- Fig. 6: einen Schnitt nach der Linie 6:6 in Fig. 4,

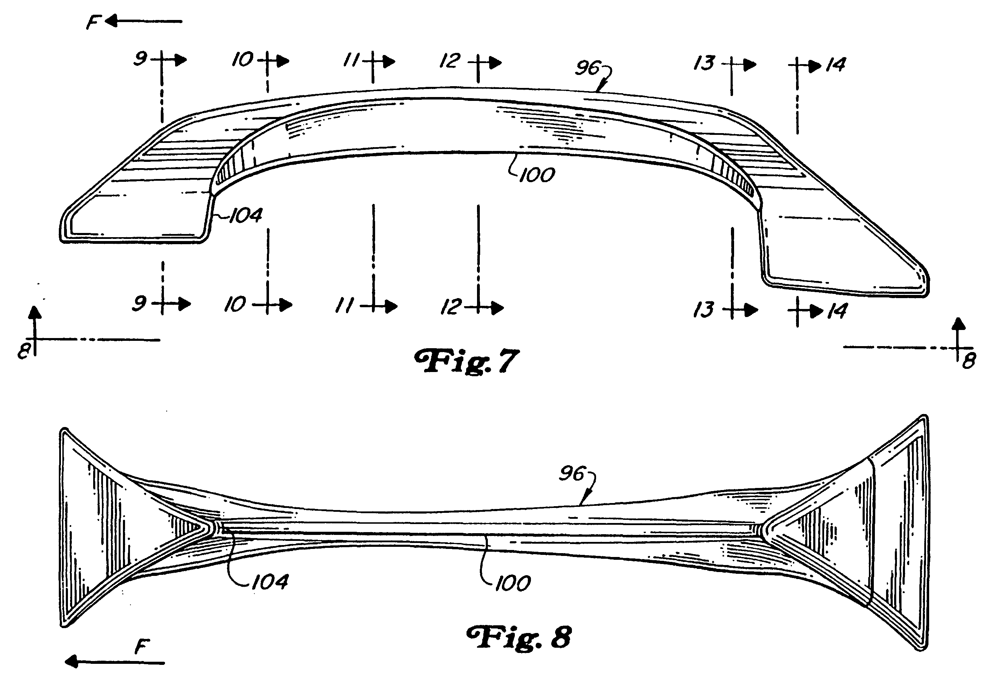

- Fig. 7: einen Stromleiter in Seitenansicht,
- Fig. 8: den Stromteiler nach Fig. 7 von unten gesehen,

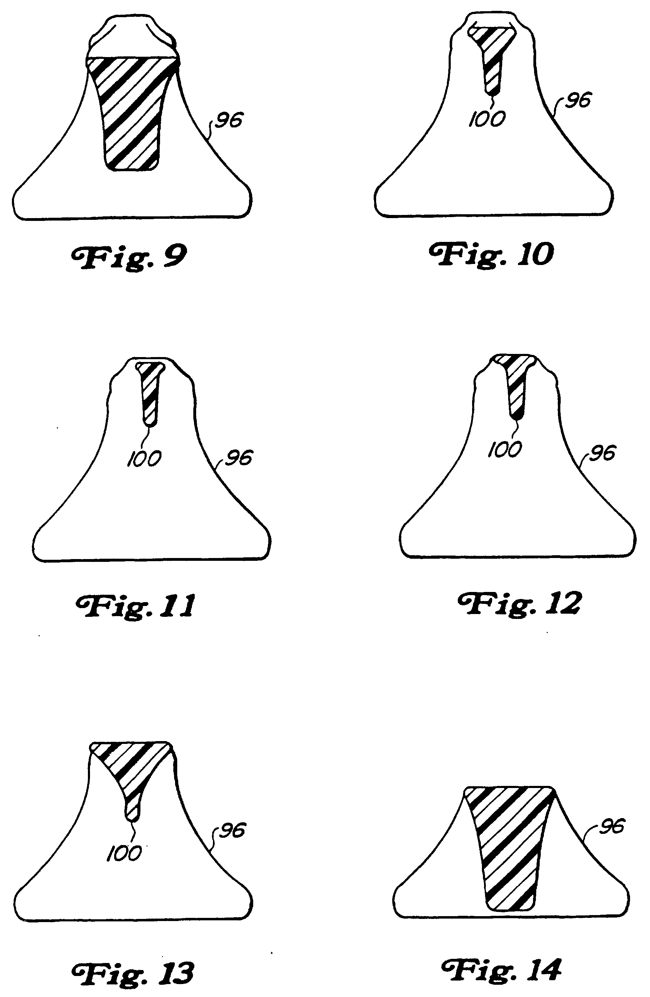

- Fig. 9 - 14: Schnitte nach den in Fig. 7 angedeuteten Schnittlinien und
- Fig. 15: das vollständig gekapselte Mähwerksgehäuse in perspektivischer Darstellung.

Ein Rasenmäher 10 für den Mulcheinsatz ist mit einem Mähwerksgehäuse 12 versehen, das an dem Rahmen eines nicht dargestellten Rasentraktors zwischen dessen vorderen und rückwärtigen Radpaaren aufgehängt werden kann. Die Oberseite des Mähwerksgehäuses 12 ist mit 14 bezeichnet und seine umlaufende Seitenwand mit 16. Beim Mulchen wird das Schnittgut nicht aufgesammelt, da Mulchmäher in der Regel nicht mit einem Auswurf für das Schnittgut versehen sind. Vielmehr wird das Schnittgut in dem rundum geschlossenen Mähwerksgehäuse 12 nach dem Schneiden hochgewirbelt und zum Zirkulieren gebracht, wobei es durch Spezialmesser 18 und 20 nochmals geschnitten oder fein gehäckselt wird, bevor es in die Grasnarbe fein verteilt zurückgeblasen wird und dort als Dünger den Graspflanzen zugute kommt. Die Messer 18 und 20 sind für ihren Mulcheinsatz speziell gestaltet und im einzelnen mit einem äußeren Schneidteil 22 versehen, der eine vorlaufende Schneidkante 24 und einen nachlaufenden nach oben abgebogenen Flügelteil 26 aufweist, der einen Aufwind zum Schwebenlassen des Schnittguts innerhalb des Mähwerksgehäuses 12 erzeugt, wenn die Messer 18 und 20 umlaufen. Die Messer 18 und 20 weisen außerdem einen inneren Mulchabschnitt 28 auf, der eine vorlaufende Schneidkante 30 und einen nachlaufenden Abweisteil 32 hat, der derart gestaltet ist, dass die Luft und das Schnittgut nach unten gelenkt werden, damit das Mulchgut auf die Grasnarbe gelangt.

Das Antriebssystem des Rasenmähers 10 ist mit 34 bezeichnet. Es bewirkt, dass die beiden Messer 18 und 20 im Mähwerksgehäuse 12 umlaufen. Zu ihm gehört eine Antriebsriemenscheibe 38, die über einen Keilriemen 36 antreibbar ist, der zu einem herkömmlichen in der Zeichnung nicht weiter dargestellten Riementrieb gehört. Die Antriebsriemenscheibe 38 ist auf einer ersten Spindel 40 angeordnet, an deren unteres Ende das erste oder rechte Messer 18 befestigt ist. Unterhalb der Antriebsriemenscheibe 38 ist auf der Spindel 40 ein Zahnrad 44 angeordnet, um das ein als Timer dienender elastischer Zahnriemen 42 umläuft. Dieser ist weiter um Leit- oder Spannrollen, und zwar um ein erstes und um ein zweites Umlenkrad 46 und 48 geführt, die auf einer Befestigungsplatte 50 angeordnet sind. Die Befestigungsplatte 50 ist mit dem Mähwerksgehäuse 12 indirekt verbunden, oberhalb der Oberseite 14 des Mähwerksgehäuses 12 vorgesehen und durch Spindelgehäuse 52 und 54 gehalten. Das zweite Umlenkrad dient außerdem als Spannrad 48 für den Zahnriemen 42, der noch um ein zweites Zahnrad 56 geführt ist und dieses antreibt. Das zweite Zahnrad 56 sitzt auf einer zweiten Spindel 58 drehfest auf, an deren unteres Ende das zweite oder linke Messer 20 angeschlossen ist. Im Einsatz wird die Antriebsriemenscheibe 38 über den Keilriemen in Drehung versetzt. Dadurch werden auch die erste Spindel 40, das erste Zahnrad 44 und das erste Messer 18 mitgedreht. Über den Zahnriemen 42 wird von dem ersten Zahnrad 44 aus das zweite Zahnrad 56 angetrieben. Bei umlaufendem zweiten Zahnrad werden damit die zweite Spindel 58 und das zweite Messer 20 mit der entsprechenden Drehzahl angetrieben. Das Antriebssystem 34 ist derart ausgebildet, dass die rechte Spindel und das rechte Messer 18 im Uhrzeigersinn umlaufen, während die linke Spindel 58 und das linke Messer entgegen dem Uhrzeigersinn umlaufen. Das rechte und das linke Messer 18 und 20 laufen also gegenläufig um.

Eine Stell- oder Spanneinrichtung 60 ist auf der Befestigungsplatte 50 vorgesehen. Sie besteht u. a. aus einer Lasche 62, mit der das zweite Umlenkrad 48 befestigt ist. Das zweite Umlenkrad 48 ist in einem Schlitz verstellbar, der in der Befestigungsplatte 50 vorgesehen ist. Außerdem wird von der Lasche 62 eine Stange 64 aufgenommen. Diese hat einen mit Gewinde versehenen Endteil 66 und ist mit der Befestigungsplatte 50 schwenkbar verbunden. Eine Druckfeder 68 ist zwischen einem abgewinkelten Teil der Lasche 62 und einer Scheibe 70 vorgesehen, die auf die Stange aufgeschoben ist und durch eine Mutter 72, die auf dem Endteil 66 aufgeschraubt ist, in ihrer Stellung gehalten wird. Damit drückt die Feder 68 gegen die Scheibe 70 und die Lasche 62, wodurch die Lasche 62 und das zweite Umlenkrad 48 derart in einer Richtung vorgespannt werden, dass der Zahnriemen 42 gespannt wird. Die Federkraft der Feder 68 bzw. deren Länge kann durch Verstellen der Mutter 72 auf dem mit Gewinde versehenen Endteil 66 der Stange 64 eingestellt werden, damit der Riemen 42 richtig gespannt ist und sich richtig um die verschiedenen Zahnräder und Umlenkräder wickelt. Sobald der Zahnriemen 42 die erforderliche Spannung aufweist, kann das zweite Umlenkrad 48 mit Bezug auf die Befestigungsplatte 50 festgesetzt werden.

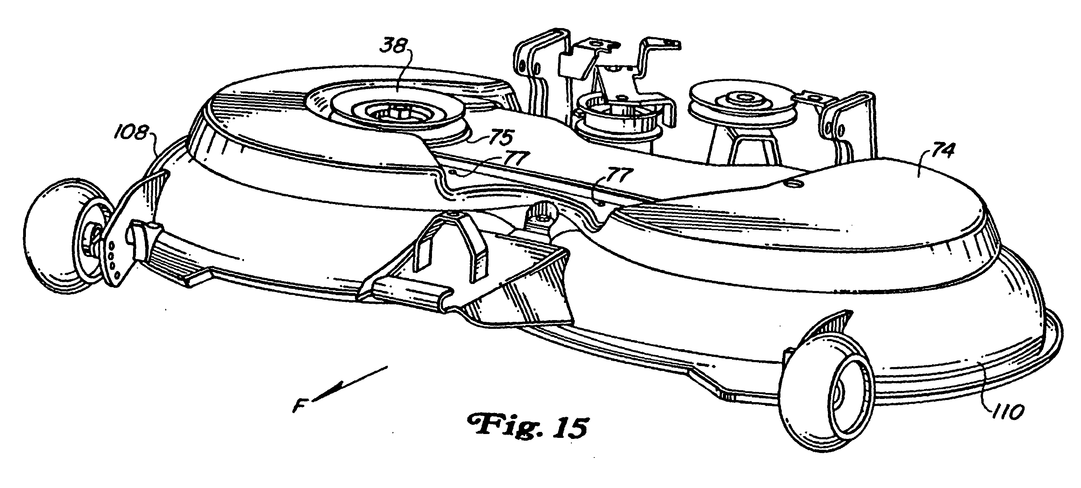

Ein am besten aus Fig. 15 ersichtlicher Deckel 74 kann auf die Befestigungsplatte 50 aufgesetzt werden, um das Antriebssystem 34 abzudecken und um Geräusche zu dämpfen, die durch das Antriebssystem hervorgerufen werden. Der Deckel 74 dient außerdem als Schutz, der verhindert, dass sich Schmutz in dem und um das Antriebssystem festsetzt. Dadurch wird natürlich die Wirkungsweise des Antriebssystem verbessert. Aus Fig. 15 ist außerdem noch erkennbar, dass in dem Deckel 74 eine Öffnung 75 vorgesehen ist, die der Größe der Antriebsscheibe 38 entspricht, so dass die Antriebsscheibe 38 durch diese hindurchtreten kann, wenn der Deckel 74 auf das Mähwerksgehäuse 12 aufgesetzt wird. Eine Vielzahl von Befestigungsschrauben 77 sichern den Deckel 74 an einem Flansch 79 an der Befestigungsplatte 50. Dadurch, dass der Deckel 74 mit der Befestigungsplatte 50 und nicht mit dem Mähwerksgehäuse 12 unmittelbar verbunden wird, lässt sich erreichen, dass weniger Metallteile in das Innere der Messerkammem 76 und 78 vorstehen.

Da an der Befestigungsplatte 50 die Umlenkräder 46 und 48 und die Spanneinrichtung 60 unmittelbar angeordnet sind und nicht unmittelbar an dem Mähwerksgehäuse 12, treten deren Befestigungselemente auch nicht durch das Mähwerksgehäuse 12 in das Innere der Messerkammem 76 und 78 ein. Das Innere der Messerkammern kann daher relativ glatt und kontinuierlich ohne vorstehende und gegebenenfalls scharfe Teile ausgebildet sein, an denen sich Schnittgut ansammeln und das Mähwerksgehäuse 12 verstopfen könnte. Ein wirkungsvolles Mähen und Mulchen ist damit erleichtert.

Die Befestigungsplatte 50 dient femer als Aussteifung oder Versteifung für die Spindeln 40 und 58, wenn diese durch den Zahnriemen 42 in Drehung versetzt werden. Außerdem hilft die Befestigungsplatte 50, Kräfte aufzufangen, wenn die Messer oder eines der Messer 18 oder 20 auf Hindernisse oder Fremdkörper auftreffen. Dabei auftretende Kräfte werden von den Messern 18 und 20 über die Spindeln 40 und 58 in deren Spindelgehäuse 52 und 54 und schließlich in die Befestigungsplatte 50 und in das Mähwerksgehäuse 12 übertragen. Die Befestigungsplatte hilft, diese Kräfte zu absorbieren, indem sie das Mähwerksgehäuse 12 versteift, so dass das Mähwerksgehäuse durch solche Kräfte nicht oder zumindest weniger deformiert wird. Reliefteile 112 und der an die Befestigungsplatte 50 angeformte Flansch 79 verstärken und versteifen die Befestigungsplatte 50 zusätzlich. Wären derartige Reliefteile oder andere Versteifungen unmittelbar an dem Mähwerksgehäuse 12 vorgesehen, um dieses für ein mögliches Auffangen von Kräften zu versteifen, so würden hierdurch Ansätze in dem Inneren der Messerkammem entstehen, an denen sich nasses oder klebriges Schnittgut festsetzen könnte. Die Befestigungsplatte bietet sich daher als ein Mittel an, in das Versteifungen eingeformt werden können oder das Versteifungen aufweist, wie den Flansch, so dass der Schnittgutflug oder - fluss dadurch nicht behindert wird. Die Befestigungsplatte 50 isoliert außerdem Vibrationen, die durch das Antriebssystem 34 und dessen Umlenkräder 46 und 48 hervorgerufen werden.

Die Befestigungsmittel zum Anschließen des Umlenkrades 46 an die Befestigungsplatte 50 bestehen beispielsweise aus einer Unterlegscheibe, einem Sechskantbolzen, einem Abstandshalter und einer Verschlussmutterscheibe. Die Befestigungsmittel zum Anschließen des zweiten Umlenkrades 48 an die Befestigungsplatte 50 können aus einem Abstandshalter, einem Wagenbolzen und einer Verschlussmutterscheibe bestehen.

Nachfolgend wird auf die Formgebung des Mähwerksgehäuses 12 näher eingegangen. Es wurde bereits darauf verwiesen, dass das Mähwerksgehäuse 12 zwei nebeneinander liegende Messerkammem 76 und 78 aufweist, in denen während des Einsatzes ein rechtes und ein linkes Messer 18 und 20 umlaufen. Jede Messerkammer 76 und 78 hat einen Ringkanal oder eine Auskehlung 80, der bzw. die sich um die Drehachse der Messer und Spindeln 40 oder 58 erstrecken. Hierbei haben ein Frontabschnitt 82, ein Seitenabschnitt 84 und ein Rückenabschnitt 86 denselben Radius mit den Spindeln 40 und 58 als Zentrum. Die Abschnitte 88 der Auskehlungen zwischen den Spindeln 40 und 58 haben einen geringeren Abstand zu dem Zentrum als die übrigen Abschnitte. Von oben gesehen haben die Auskehlungen damit in etwa eine D-Form, wobei die abgeflachten Abschnitte 88 unmittelbar nebeneinander liegen. Die abgeflachten Abschnitte 88 der Auskehlungen 80 unterstützen das Schnittgut darin, dass es zusammen mit der Luft nach innen gerichtet wird, so dass es nicht in den verbleibenden Raum der Messerkammem gerichtet wird und auf das dort vorhandene Schnittgut einwirkt.

Die umlaufenden Messer schneiden das Gut nahe dem Frontabschnitt 82 des Mähwerksgehäuses 12 in dem Bereich, in dem die äußeren Schneidteile 22 der Messer von der Mittellinie des Mähwerksgehäuses 12 fort nach außen laufen. Die nachlaufenden nach oben gebogenen Flügelteile 26 erzeugen innerhalb der Messerkammem einen Aufwind. Auf diese Weise können die Flügelteile, nachdem das Gut im vorderen Abschnitt 82 der Auskehlung geschnitten wurde, das Schnittgut anheben und es in die Drehrichtung der Messer leiten. Dabei wird das Schnittgut durch die Auskehlung transportiert, so dass es in feinere Partikel zerkleinert werden kann. Der vordere Abschnitt 82 der Auskehlungen 80 liegt mit seiner größten Höhe beträchtlich oberhalb der Messer 18 und 20. Sie sind damit relativ hoch und eng und ermöglichen dem Schnittgut und der Luft, dass es oder sie in einem beträchtlichen Abstand oberhalb der Messer geführt wird. Von den vorderen Abschnitten ausgehend neigen sich dann die Auskehlungen nach unten zu den rückwärtigen Abschnitten 86. Der Rückenabschnitt 86 einer jeden Auskehlung 80 ist relativ niedrig und weit. Die niedrige Oberseite 14 der rückwärtigen Abschnitte 86 der Auskehlungen 80 drückt das Schnittgut nach unten, wo es in den Rotationskreis der Messer zu einem nochmaligen Schnitt gelangt. Die niedrige Oberseite 14 des rückwärtigen Abschnittes 86 der Auskehlungen 80 trägt auch dazu bei, dass fein gemulchtes Schnittgut bodenwärts gedrückt wird oder in die Grasnarbe fällt, da das Schnittgut in diesem Bereich der Auskehlungen der Grasnarbe am nächsten ist. Außerdem ist der Rückenabschnitt 86 der Auskehlungen relativ breit, so dass das Schnittgut radial nach innen gelangen kann, wo es eher mit dem Mulchteil 28 der Messer 18, 20 in Berührung kommt und somit nochmals geschnitten wird, um dann über den nach unten gerichteten Abweisteil 32 in die Grasnarbe abgelegt werden zu können.

Ein vorderer Rand 90 des Mähwerksgehäuses 12 hat eine unterste Kante 92, die etwas höher liegt als ein rückwärtiger Rand 94. Der höher liegende vordere Rand 90 gibt dem Mähwerksgehäuse 12 ausreichend viel Freiraum, um über das noch nicht geschnittene Gras zu fahren, ohne dass das Gras niedergedrückt oder nach vorne umgebogen würde. Das Gras befindet sich damit in einer besseren Position zum Anheben durch den Aufwind in den Messerkammem. Schließlich befindet sich das Gras auch in einer besseren Stellung für den Schnitt. Die anderen Abschnitte der Seitenwände 16 der Messerkammem 76 und 78 liegen tiefer als der vordere Rand und tragen damit dazu bei, dass das Schnittgut für einen wiederholten Schnitt in den Messerkammem verbleibt.

Bei dem bevorzugten Ausführungsbeispiel laufen die beiden Messer 18 und 20 gegenläufig um, wobei sich die beiden Drehkreise um etwa 5 cm überlappen. Die Messerkammern 76 und 78 liegen unmittelbar nebeneinander, damit die Rotationskreise sich in einem Bereich überlappen, der zwischen den Messerkammem 76 und 78 liegt. Ein Stromteiler 96 ist über Schrauben 98 an die Oberseite 14 des Mähwerksgehäuses 12 zwischen den beiden Messerkammem 76 und 78 angeschlossen. Von der Oberseite 14 des Mähwerksgehäuses 12 aus erstreckt sich der Stromteiler 96 nach unten. Seine unterste Kante ist mit 100 bezeichnet und befindet sich relativ dicht über den umlaufenden Messern 18 und 20. Der Stromteiler 96 bildet eine Barriere zwischen den beiden Messerkammern 76 und 78, so dass ein Zusammenspiel von Luft und Schnittgut zwischen den Messerkammern weitgehend vermieden ist. Wäre ein derartiges Zusammenspiel in einem größeren Maße möglich, könnten sich große Schnittgutklumpen in diesem Bereich ansammeln. Der Grund hierfür ist darin zu sehen, dass die Messer 18 und 20 das Schnittgut in dem Bereich zwischen den Messerkammem nach vome leiten und sich schwebende Klumpen von Schnittgut in dem vorderen Zentralabschnitt 102 des Mähwerksgehäuses anhäufen können. Vielmehr verhindert der Stromteiler 96, dass der Strom in einer Messerkammer nicht mit dem Strom in der anderen Messerkammer kollidiert. Das Schnittgut wird dadurch in seiner Kammer in seiner Umlaufbewegung gehalten, und Klumpen können sich im vorderen Zentralbereich nicht bilden. Jede größere Anhäufung von Schnittgut in diesem Abschnitt 102 wird durch den Stromteiler 96 aufgebrochen. Durch die sich in vertikale Richtung erstreckende vordere Kante 104 des Stromteilers 96 werden etwaige Klumpen, die sich in dem Bereich zwischen den Kammern gebildet haben könnten, aufgeschlitzt oder halbiert. Dadurch kann das Schnittgut in den einzelnen Kammern wieder besser umlaufen für ein weiteres Zerteilen.

Der in der Zeichnung dargestellte Stromteiler 96 ist ein Plastikteil, der über die Schrauben 98 mit der Oberseite 14 des Mähwerksgehäuses befestigt ist. Das Mähwerksgehäuse 12 selbst ist ein metallisches Pressteil. Da der Stromteiler 96 eine ganz bestimmte Form hat, wäre es schwierig oder zumindest kostspielig, ihn einteilig mit dem Mähwerksgehäuse 12 auszubilden. Wäre der Stromteiler in das Mähwerksgehäuse 12 integriert, so wäre in diesem Bereich die Konstruktion zu weich, was ebenfalls nicht akzeptabel ist, weil es dann hier zu Durchbiegungen kommen könnte. Aus all diesen Gründen ist der Stromteiler als ein separater Teil ausgebildet, der an das Mähwerksgehäuse angeschlossen wird. Das Mähwerksgehäuse 12 wird dadurch verstärkt. Natürlich kann aber ein Stromteiler im Rahmen der Erfindung mit dem Mähwerksgehäuse einteilig ausgebildet sein.

Der Mulchmäher nach dem bevorzugten Ausführungsbeispiel ist so gestaltet, dass in den Messerkammem keine Vorsprünge oder hervortretende Teile vorgesehen sind, an denen sich das Schnittgut festsetzen könnte. Eine Verstopfungsgefahr innerhalb der Messerkammem ist damit wesentlich reduziert. Die inneren Oberflächen des Mähwerksgehäuses 12 sind relativ glatt ohne hervorstehende Teile oder scharfe Kanten gestaltet, an denen sich das Schnittgut festsetzen könnte oder gegen die das Schnittgut fliegen könnte. Sehr wenige aus Metall bestehende Verbindungsteile, wie Schrauben usw. sind unmittelbar mit den Wänden des Mähwerksgehäuses 12 befestigt. Bei herkömmlichen Mulchmähern sind die Umlenkscheiben in der Regel unmittelbar auf der Oberseite des Mähwerksgehäuses befestigt. Bei dem bevorzugten Ausführungsbeispiel dagegen sind die Umlenkräder 46 und 48 auf der Befestigungsplatte 50 angeordnet, die sich zwischen der ersten und der zweiten Spindel 40 und 58 erstreckt. Die Befestigungsplatte 50 ist mit der Oberseite des Mähwerksgehäuses 12 verbunden. Die Spindelgehäuse 52 und 54 sind über Schrauben mit dem Mähwerksgehäuse 12 verbunden, so dass die Befestigungsplatte 50 auf ihrem Platz gesichert ist. Auf diese Weise stehen die Befestigungselemente für die Umlenkräder 46 und 48 nicht bis in das Innere des Mähwerksgehäuses vor. Damit kann dessen Innenseite glatt und kontinuierlich ohne hervorstehende Teile gehalten werden, was die bereits angesprochenen Verstopfungen erheblich reduziert bzw. vermeidet.

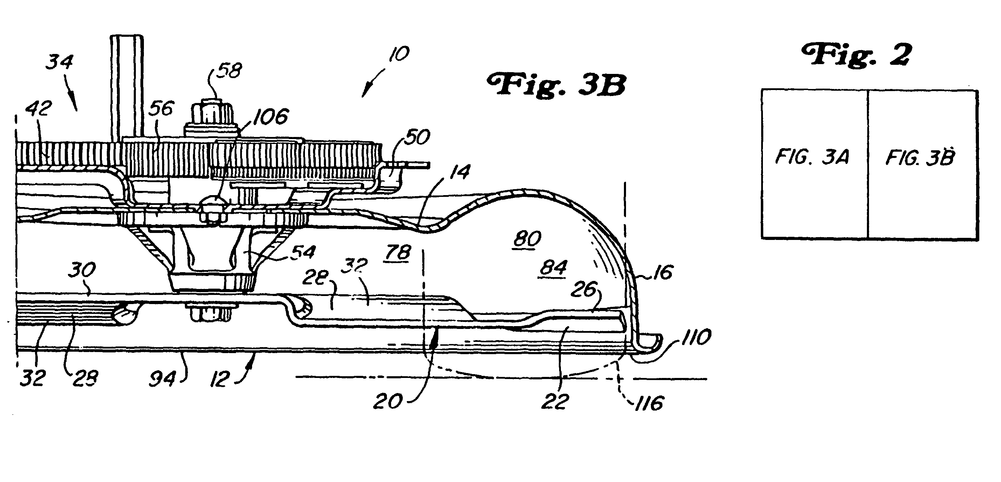

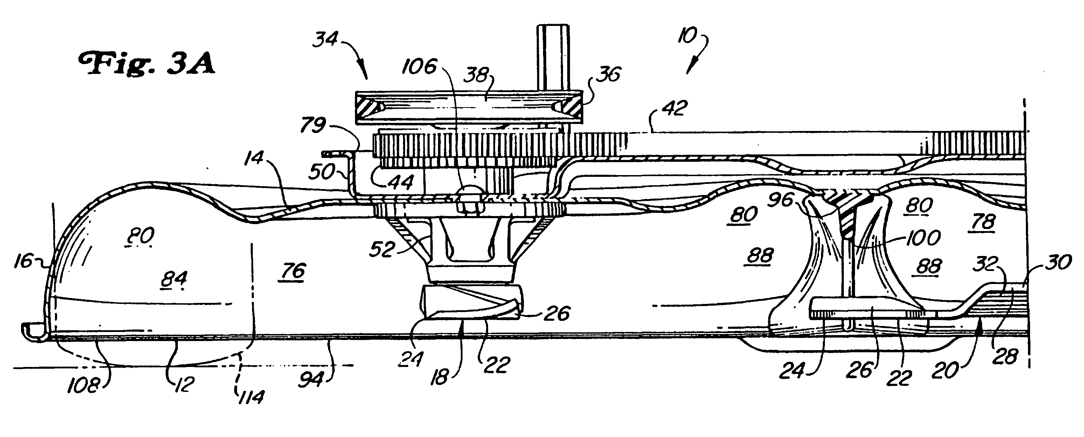

Bei dem Mulchmechanismus des bevorzugten Ausführungsbeispiels rotiert das rechte Messer 18 im Uhrzeigersinn und das linke Messer 20 entgegen dem Uhrzeigersinn. Das Mähwerksgehäuse 12 ist unterhalb des Rumpfes eines Rasentraktors derart angeordnet, dass das rechte Vorderrad 114 des Rasentraktors mehr oder weniger zu dem äußeren rechten Abschnitt 108 der Auskehlung 80 an der rechten Messerkammer ausgerichtet ist. Entsprechend ist das linke Vorderrad 116 des Rasentraktors zu dem äußeren linken Abschnitt 110 der Auskehlung 80 an der linken Messerkammer ausgerichtet. Beide Ausrichtungen sind in der Fig. 3A bzw. 3B erkennbar. Bei einer normalen Geradeausfahrt in Vorwärtsrichtung laufen die Vorderräder 114 und 116 über einen der Vorderradbreite entsprechenden Grasstreifen, wodurch das hier befindliche Gras nach vorne platt gedrückt wird. Unmittelbar danach werden allerdings die äußeren Abschnitte 108 und 110 der Auskehlungen 80 über diese platt gedrückten Grasstreifen geführt und es kommt sofort wieder zu einer Aufrichtung des Grases, da die Messer derart rotieren, dass ihre nach oben gerichteten Flügelteile 26 in diesem Bereich nach rückwärts laufen, so dass der durch die Messer 18 und 20 erzeugte Aufwind nach rückwärts und oben gerichtet ist. Der nach rückwärts und oben gerichtete Aufwind trifft daher in einer idealen Richtung auf das liegende Gras, damit es sich wieder aufstellt.

Die Drehkreise des rechten und des linken Messers 18 und 20 überlappen sich in dem Bereich zwischen den Messerkammem 76 und 78, so dass in diesem Bereich auch kein Streifen ungeschnittenen Grases übrig bleiben kann. Damit ist auch ein seitliches Versetzen der Messerkammem oder Staffeln in Diagonalrichtung nicht erforderlich. Auf diese Weise können die Messerkammem zu einer kompakten Vorrichtung unterhalb eines relativ schmalen Rasentraktors zusammengefasst werden. Die kompakte Ausbildung der Messerkammem erlaubt dem Fahrer des Rasentraktors nahe an Hindernissen auf der rechten oder linken Seite vorbei zu mähen. Im Ganzen gesehen ist der Traktor leicht zu manövrieren.

## Patentansprüche

1. Mäher mit einem bodenwärts offenen Mähwerksgehäuse (12), in dem wenigstens zwei Messerkammern (76, 78) vorgesehen sind, wobei in jeder Messerkammer (76, 78) ein um eine vertikale Achse umlaufendes Messer (18, 20) vorgesehen ist, und daß die Messerkreise sich überlappen, und in dem Bereich der sich überlappenden Messerkreise ein Barriere vorgesehen ist, die sich von der Oberseite des Mähwerksgehäuses (12) aus nach unten bis dicht oberhalb des ersten und zweiten Messers (18, 20) erstreckt **dadurch gekennzeichnet, daß** die Barriere ein Flußteiler (96) ist, der mit einem Abschnitt versehen ist, der das Gemisch aus Luft und Schnittgut teilt und in die entsprechende Messerkammer (76, 78) leitet, und daß das erste Messer (18) bezogen auf eine Fahrt in Vorwärtsrichtung rechts von dem zweiten Messer (20) angeordnet ist und im Einsatz im Uhrzeigersinn umläuft, daß das zweite Messer (20) bezogen auf eine Fahrt in Vorwärtsrichtung links von dem ersten Messer (18) angeordnet ist und im Einsatz entgegen dem Uhrzeigersinn umläuft.

2. Mäher nach Anspruch 1, **dadurch gekennzeichnet, daß** die beiden Messerkammern (76, 78) umfangsmäßig geschlossen sind.

3. Mäher nach einem oder mehreren der vorherigen Ansprüche, **dadurch gekennzeichnet, daß** die Messer (18, 20) als Mulchmesser mit einem äußeren Schneidteil (22), der einen nachlaufenden nach oben gebogenen Flügelteil (26) aufweist, und mit einem inneren Mulchteil (28) ausgebildet sind, der einen nachlaufenden nach -unten gebogenen Abweisteil (32) aufweist.

4. Mäher nach einem oder mehreren der vorherigen Ansprüche, **dadurch gekennzeichnet, daß** jede Messerkammer (76, 78) mit einer umlaufenden Ringkammer oder Auskehlung (80) versehen ist, die oberhalb des zugehörigen Messerkreises liegt, in einem Frontabschnitt (82) des Mähwerksgehäuses (12) relativ hoch ist und sich zum Rückabschnitt (86) des Mähwerksgehäuses (12) hin abflacht.

5. Mäher nach Anspruch 4, **dadurch gekennzeichnet, daß** die Ringkammer oder Auskehlung (80) im Frontbereich relativ schmal und im Rückabschnitt relativ breit ist.

6. Mäher nach einem oder mehreren der vorherigen Ansprüche, **dadurch gekennzeichnet, daß** das Mähwerksgehäuse (12) in seinem Frontabschnitt (82) mit einer unteren Kante (90) versehen ist, die höher liegt als eine untere Kante (94) in dem Rückabschnitt (86) des Mähwerksgehäuses (12).

7. Mäher nach Anspruch 4, **dadurch gekennzeichnet, daß** die Ringkammer oder Auskehlung (80) in dem Bereich der sich überlappenden Messerkreise einen geringeren Abstand zur zugehörigen Messerachse als in den übrigen Bereichen aufweist.

8. Mäher nach einem oder mehreren der vorherigen Ansprüche, **dadurch gekennzeichnet, daß** jede Messerkammer (76, 78) D-oder etwa D-förmig ausgebildet ist.

9. Mäher nach einem oder mehreren der vorherigen Ansprüche, **dadurch gekennzeichnet, daß** das Mähwerksgehäuse (12) an einem Rasentraktor hinter dessen beiden Vorderräder (114, 116) derart aufgehängt ist, daß das rechte Vorderrad mit seiner Außenkante zu der rechten Außenkante der zugehörigen Messerkammer und daß das linke Vorderrad mit seiner Außenkante zu der linken Außenkante der zugehörigen Messerkammer ausgerichtet ist.

## Claims

1. A mower with a mower mechanism housing (12) open to the ground, in which at least two blade chambers (76, 78) are provided, wherein a blade (18, 20) rotating about a vertical axis is provided in each blade chamber (76, 78) and the blade circles overlap one another and a barrier is provided in the region of the overlapping blade circles, extending down from the upper side of the mower mechanism housing (12) to closely above the first and second blades (18, 20), **characterized in that** the barrier is a divider (96), which is provided with a section which divides the mixture of air and cuttings and passes it into the corresponding blade chambers (76, 78), and **in that** the first blade (18) is arranged to the right of the second blade (20) in relation to travel on the forward direction and rotates clockwise in use, **in that** the second blade (20) is arranged to the left of the first blade (18) in relation to travel in the forward direction and rotates anticlockwise in use.

2. A mower according to claim 1, **characterized in that** the two blade chambers (76, 78) are closed at the periphery.

3. A mower according to one or more of the preceding claims, **characterized in that** the blades (18, 20) are in the form of mulching blades with an outer cutting part (22), which has a trailing, upwardly bent wing part (26), and an inner mulching part (28), which has a trailing, downwardly bent deflector part (32).

4. A mower according to one or more of the preceding claims, **characterized in that** each blade chamber (76, 78) is provided with a surrounding annular chamber or channel (80) which lies above the associated blade circle, is relatively high in a front section (82) of the mower housing (12) and flattens off to the rear section (86) of the mower mechanism housing (12).

5. A mower according to claim 4, **characterized in that** the annular chamber or channel (80) is relatively narrow in the front region and relatively wide in the rear section.

6. A mower according to one or more of the preceding claims, **characterized in that** the mower mechanism housing (12) is provided in its front section (82) with a lower edge (90) which lies higher than a lower edge (94) in the rear section (86) of the mower mechanism housing (12).

7. A mower according to claim 4, **characterized in that** the annular chamber or channel (80) has a smaller spacing from the associated blade axis in the region of the overlapping blade circles that in the remaining regions.

8. A mower according to one or more of the preceding claims, **characterized in that** each blade chamber (76, 78) is of D or approximate D shape.

9. A mower according to one or more of the preceding claims, **characterized in that** the mower mechanism housing (12) is so suspended on a lawn tractor behind its two front wheels (114, 116) that the outer edge of the right front wheel is aligned with the right outer edge of the associated blade chamber and **in that** the outer edge of the left front wheel is aligned with the left outer edge of the associated blade chamber.

## Revendications

1. Tondeuse du type comportant un carter de tondeuse (12) ouvert vers le bas, dans lequel sont prévues au moins deux chambres de coupe (76, 78), dans chaque chambre de coupe (76, 78) étant prévu un outil de coupe ou couteau (18, 20) tournant autour d'un axe vertical, les trajectoires des couteaux se chevauchant, et dans la zone de chevauchement des trajectoires des couteaux étant prévue une barrière qui s'étend vers le bas depuis la face supérieure du carter de tondeuse (12) jusqu'au-dessus du premier et du second couteaux (18, 20), **caractérisée en ce que** la barrière est un séparateur de flux (96), lequel est pourvu d'une portion qui répartit le mélange d'air et de produit coupé et l'amène dans la chambre de coupe correspondante (76, 78), et **en ce que** le premier couteau (18), par rapport à un trajet en direction avant est situé à droite du second couteau (20) et tourne dans la direction des aiguilles d'une montre, et le second couteau (20), par rapport à un trajet en direction avant est situé à gauche du premier couteau (18), et tourne dans le sens contraire des aiguilles d'une montre.

2. Tondeuse selon la revendication 1, **caractérisée en ce que** les deux chambres de coupe (76, 78) sont fermées sur leur périphérie.

3. Tondeuse selon l'une ou plusieurs des revendications précédentes, **caractérisée en ce que** les couteaux (18, 20) sont des couteaux à paillis, avec une portion coupante extérieure (22) qui présente une ailette de suite (26) arrondie vers le haut, et avec une portion poussoir intérieure (28) arrondie vers le bas.

4. Tondeuse selon l'une ou plusieurs des revendications précédentes, **caractérisée en ce que** chaque chambre de coupe (76, 78) est prévue avec une chambre annulaire ou gorge périphérique (80) qui se situe au-dessus du cercle de coupe associé dans une section frontale (82) relativement élevée du carter de la tondeuse (12) et qui s'aplatit vers la section postérieure (86) du carter de tondeuse (12).

5. Tondeuse selon la revendication 4, **caractérisée en ce que** la chambre ou gorge annulaire (80) est relativement étroite dans sa région frontale et relativement large dans sa région postérieure.

6. Tondeuse selon l'une ou plusieurs revendications des précédentes, **caractérisée en ce que** le carter de tondeuse (12) présente dans sa région frontale une arête inférieure (90) qui est située plus haut qu'une arête inférieure (94) de la région postérieure (86) du carter de tondeuse (12).

7. Tondeuse selon la revendication 4, **caractérisée en ce que** la chambre ou gorge annulaire (80), dans la région de chevauchement des cercles des couteaux, est à une distance de l'axe du couteau associé plus faible que dans les autres régions.

8. Tondeuse selon l'une ou plusieurs des revendications précédentes, **caractérisée en ce que** chaque chambre de coupe (76, 78) a une forme en D ou à peu près en D.

9. Tondeuse selon l'une ou plusieurs des revendications précédentes, **caractérisée en ce que** le carter de tondeuse (12) est accroché à un tracteur de tondeuse derrière les deux roues avant (114, 116) de celui-ci d'une manière telle que la roue avant de droite est orientée par son arête extérieure vers l'arête extérieure de droite de la chambre de coupe associée, et la roue avant de gauche est orientée par son arête extérieure vers l'arête extérieure de gauche de la chambre de coupe associée.
